# EUROPEAN PATENT APPLICATION

(11) **EP 3 145 224 A1**
(43) Date of publication of application: **22.03.2017**
(21) Application number: 15860086.6
(22) Date of filing: 03.06.2015
(51) Int. Cl.: H04W 4/24

(54) **CHARGING METHOD, CHARGING DEVICE AND CHARGING SYSTEM**

(30) Priority: 17.11.2014 CN 201410654552
(71) Applicant: Huawei Technologies Co., Ltd., Longgang District Shenzhen, Guangdong 518129 (CN)
(72) Inventor: YANG, Enfeng, Shenzhen Guangdong 518129 (CN)
(74) Representative: Thun, Clemens
(86) International application number: PCT/CN2015/080679
(87) International publication number: WO 2016/078392

(57) **Abstract**

Embodiments of the present invention provide a charging method, a charging device, and a charging system. The charging method includes: sending, by an access device, a traffic volume request to a charging device; receiving, by the access device, information about a granted traffic volume that is returned by the charging device according to the traffic volume request; and sending, by the access device, a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated in a process in which the end user uses the granted traffic volume. According to the technical solutions provided in the embodiments of the present invention, information about each phase of linear traffic generated within a time in which a granted traffic volume is used is reported, so that a charging device can accurately trace traffic usage at a specific time point by a user according to the linear traffic information, thereby enabling accurate charging.

## Description

This application claims priority to Chinese Patent Application No. 201410654552.4, filed with the Chinese Patent Office on November 17, 2014, and entitled "CHARGING METHOD, CHARGING DEVICE, AND CHARGING SYSTEM", which is incorporated herein by reference in its entirety.

### TECHNICAL FIELD

The present invention relates to charging technologies, and in particular, to a charging method, a charging device, and a charging system.

### BACKGROUND

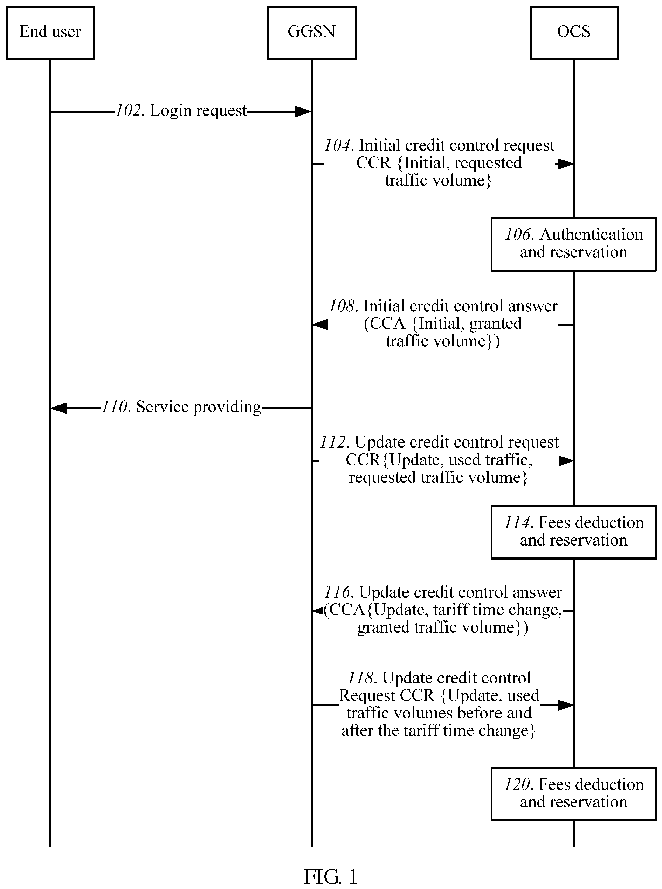

Online charging is defined by the 3rd Generation Partnership Project (3rd Generation Partnership Project, 3GPP). Generally, a gateway general packet radio service support node (Gateway General Packet Radio Service Support Node, GGSN) implements service monitoring and requesting. The GGSN interacts with an online charging system (Online Charging System, OCS) by using a Diameter Credit-Control (Diameter Credit-Control, DCC) message by using a Gy interface to complete charging for data services. Participation in charging for real-time services is emphasized when 3GPP started to define OCS online charging. In a process of performing a service, a tariff time change (Tariff Time change, TTC) is delivered by using a credit control answer (credit control answer, CCA) message for accurate charging for traffic. The following describes an existing real-time charging technology with reference to FIG. 1.

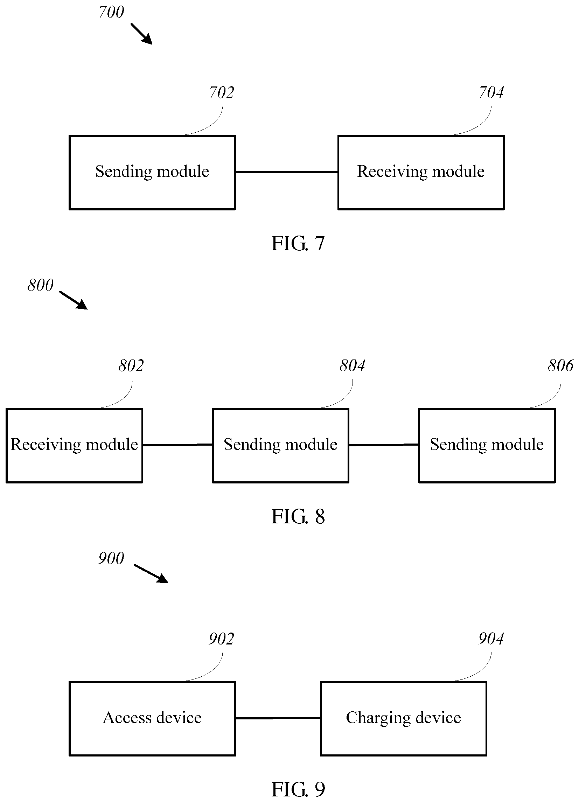

FIG. 1 is an exemplary signaling diagram of an existing real-time charging method 100. In a scenario shown in FIG. 1, 8:00 is a tariff time change point, that is, a tariff time change occurs at 8:00.

Step 102: An end user sends a login request to a GGSN.

Step 104: The GGSN sends an initial credit control request (credit control request) CCR{Initial} to request to establish a bearer service and request an OCS to grant a traffic volume, where the request carries the traffic volume requested to be granted.

Step 106: The OCS performs authentication and reservation.

The OCS checks permission of the end user to determine whether the end user is permitted to use the foregoing bearer service requested to be established. If the end user has the permission, the OCS establishes the bearer service for the end user, and reserves a granted traffic volume according to an account balance status of the end user.

Step 108: The OCS sends an initial credit control answer (credit control answer) CCA{Initial} to the GGSN, where a granted traffic volume is carried.

Step 110: After receiving the traffic volume granted by the OCS, the GGSN provides a service for the end user for use.

Step 112: When the user uses up or is about to use up the foregoing granted traffic volume, the GGSN sends an update credit control request (credit control request) CCR{Update} to the OCS to request the OCS to grant a next traffic volume, where the CCR{Update} also carries a traffic volume that has been used by the user.

Step 114: The OCS deducts fees according to the traffic volume that has been used by the user, and reserves a next granted traffic volume.

Step 116: The OCS detects that a tariff time change is about to occur, and sends to the GGSN an update credit control answer (credit control answer) CCA{Update} that carries not only the granted traffic volume but also a tariff time change.

Step 118: When the user uses up or is about to use up the granted traffic volume, the GGSN sends a CCR{Update} to the OCS to request the OCS to grant a next traffic volume, and because a tariff time change has occurred, the GGSN divides the used traffic volume into two parts in the CCR{Update} according to the tariff time change point and reports traffic volumes used before and after the tariff time change.

Step 120: The OCS deducts fees according to the traffic volumes used before and after the tariff time change, and reserves a next granted traffic volume, so that the user continue to use the service. Subsequent steps are not described herein.

During charging, the OCS deducts fees according to a used traffic volume reported in the CCR. In step 118, because the GGSN reports the traffic volumes used before and after the tariff time change, the OCS can perform accurate charging according to the traffic volumes used before and after the tariff time change, with no charging error resulting from the tariff time change.

However, sometimes a situation in which a charging error for a user is caused by a tariff processing error occurs, and fees need to be deducted according to actual service usage of the user, that is, re-rating, to achieve the objective of accurate charging. However, the 3GPP has never supported re-rating. Re-rating processing is not mentioned in the entire 3GPP specification, and generally communications equipment vendors do not provide re-rating support either. In a common practice, before a tariff goes online, tariff simulation or strict tests are used to ensure accuracy of the tariff after the tariff goes online and avoid re-rating as much as possible. In fact, however, as online charging systems are used more widely, in many billing support system (Billing support system, BSS) offices, the online charging system is already a uniform support system for pre-paid and post-paid users on the entire network. For a post-paid system born of the Tele Management Forum (Tele Management Forum, TMF), re-rating is a necessary charging system requirement. Because the 3GPP does not define re-rating services and supports only real-time charging over the Gy interface, re-rating can be based on only real-time traffic volumes reported during a service process, that is, for example, the used traffic volumes in FIG. 1. When a designed re-rating time point changes, a situation of inaccurate re-rating may occur. For example, in FIG. 1, a tariff time change takes place at 8:00. During normal real-time charging, because the GGSN reports a traffic volume used before 8:00 and a traffic volume used after 8:00, the OCS can implement accurate charging. In some scenarios, however, if a customer requires re-rating because of an incorrect package configuration, a problem may occur. For example, a tariff time change point for a package reconfigured for the customer is 9:00, but the OCS system is unable to obtain a traffic volume used before 9:00 and a traffic volume used after 9:00 from historical records. Consequently, re-rating cannot be implemented.

### SUMMARY

Embodiments of the present invention provide a charging method, where information about each phase of linear traffic generated during a process of using a granted traffic volume is reported, so that a charging device can perform accurate charging according to the linear traffic information.

According to a first aspect, a charging method is provided, where the method is used in a scenario in which traffic is generated because an end user initiates content access, and the method includes: sending, by an access device, a traffic volume request to a charging device; receiving, by the access device, information about a granted traffic volume that is returned by the charging device according to the traffic volume request; and sending, by the access device, a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

With reference to an implementation manner of the first aspect, in a first possible implementation manner of the first aspect, the linear traffic information includes a volume of each phase of linear traffic, a time point when each phase of linear traffic starts to be generated, and a duration of each phase of linear traffic.

With reference to the first aspect or the first possible implementation manner of the first aspect, in a second possible implementation manner, the linear traffic information includes a bit rate of each phase of linear traffic, a time point when each phase of linear traffic starts to be generated, and a duration of each phase of linear traffic.

With reference to the first aspect or the first and the second possible implementation manners of the first aspect, in a third possible implementation manner, a manner for obtaining the linear traffic volume includes: setting a timer, configuring a timing duration, and when a traffic use duration reaches the timing duration, acquiring, by the access device, a used traffic volume.

With reference to the first aspect or the first to the third possible implementation manners of the first aspect, in a fourth possible implementation manner, a manner for obtaining the linear traffic bit rate includes: setting a timer, configuring a timing duration, and when a traffic use duration reaches the timing duration, acquiring, by the access device, a used traffic volume and determining the linear traffic bit rate according to the used traffic volume and the timing duration.

With reference to the first aspect or any one of the first to the fourth possible implementation manners of the first aspect, in a fifth possible implementation manner, the traffic volume request and the charging request are credit control request CCR messages, the information about the granted traffic volume is carried in a credit control answer CCA message, and the parameter indicating linear traffic information is carried in an extension field or a reserved field in a CCR message.

With reference to the first aspect or any one of the first to the fifth possible implementation manners of the first aspect, in a sixth possible implementation manner, the linear traffic volume includes an uplink traffic volume and a downlink traffic volume, and the linear traffic bit rate includes an uplink traffic bit rate and a downlink traffic bit rate.

According to a second aspect, a charging method is provided, where the method is used in a scenario in which traffic is generated because an end user initiates content access, and the method includes the following steps: receiving, by a charging device, a traffic volume request sent by an access device; returning, by the charging device, information about a granted traffic volume to the access device according to the traffic volume request; receiving, by the charging device, a charging request sent by the access device, where the charging request carries a parameter indicating linear traffic information, where the linear traffic information is a parameter related to each phase of linear traffic generated during a process in which the end user uses the granted traffic volume; and performing, by the charging device, charging according to the linear traffic information.

With reference to an implementation manner of the second aspect, in a first possible implementation manner of the second aspect, the linear traffic information includes a volume of each phase of linear traffic, a time point when each phase of linear traffic starts to be generated, and a duration of each phase of linear traffic.

With reference to the second aspect or the first possible implementation manner of the second aspect, in a second possible implementation manner, the linear traffic information includes a bit rate of each phase of linear traffic, a time point when each phase of linear traffic starts to be generated, and a duration of each phase of linear traffic.

With reference to the second aspect or the first and the second possible implementation manners of the second aspect, in a third possible implementation manner, the performing charging according to the linear traffic information includes re-rating traffic.

With reference to the second aspect or the first to the third possible implementation manners of the second aspect, in a fourth possible implementation manner, the charging request is a credit control request CCR, and the parameter indicating linear traffic information is carried in an extension field or a reserved field in the credit control request.

With reference to the second aspect or any one of the first to the fourth possible implementation manners of the second aspect, in a fifth possible implementation manner, the linear traffic volume includes an uplink traffic volume and a downlink traffic volume, and the linear traffic bit rate includes an uplink traffic bit rate and a downlink traffic bit rate.

According to a third aspect, an access device is provided, where the access device is used in a scenario in which traffic is generated because an end user initiates content access, and includes a sending module and a receiving module, where the sending module is configured to send a traffic volume request to a charging device; the receiving module is configured to receive information about a granted traffic volume that is returned by the charging device according to the traffic volume request; and the sending module is further configured to send a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

With reference to an implementation manner of the third aspect, in a first possible implementation manner of the third aspect, the linear traffic information includes a volume of each phase of linear traffic, a time point when each phase of linear traffic starts to be generated, and a duration of each phase of linear traffic.

With reference to the third aspect or the first possible implementation manner of the third aspect, in a second possible implementation manner, the linear traffic information includes a bit rate of each phase of linear traffic, a time point when each phase of linear traffic starts to be generated, and a duration of each phase of linear traffic.

With reference to the third aspect or the first and the second possible implementation manners of the third aspect, in a third possible implementation manner, a manner for obtaining the linear traffic volume includes: setting a timer, configuring a timing duration, and when a traffic use duration reaches the timing duration, acquiring, by the access device, a used traffic volume.

With reference to the third aspect or the first to the third possible implementation manners of the third aspect, in a fourth possible implementation manner, a manner for obtaining the linear traffic bit rate includes: setting a timer, configuring a timing duration, and when a traffic use duration reaches the timing duration, acquiring, by the access device, a used traffic volume and determining the linear traffic bit rate according to the used traffic volume and the timing duration.

With reference to the third aspect or any one of the first to the fourth possible implementation manners of the third aspect, in a fifth possible implementation manner, the traffic volume request and the charging request are credit control request CCR messages, the information about the granted traffic volume is carried in a credit control answer CCA message, and the parameter indicating linear traffic information is carried in an extension field or a reserved field in a CCR message.

With reference to the third aspect or the first to the fifth possible implementation manners of the third aspect, in a sixth possible implementation manner, the linear traffic volume includes an uplink traffic volume and a downlink traffic volume, and the linear traffic bit rate includes an uplink traffic bit rate and a downlink traffic bit rate.

According to a fourth aspect, a charging device is provided, where the charging device is used in a scenario in which traffic is generated because an end user initiates content access, and includes a receiving module, a sending module, and a charging module, where the receiving module is configured to receive a traffic volume request sent by an access device; the sending module is configured to return information about a granted traffic volume to the access device according to the traffic volume request; the receiving module is further configured to receive a charging request sent by the access device, where the charging request carries a parameter indicating linear traffic information, where the linear traffic information is a parameter related to each phase of linear traffic generated during a process in which the end user uses the granted traffic volume; and the charging module is configured to perform charging according to the linear traffic information.

With reference to an implementation manner of the fourth aspect, in a first possible implementation manner of the fourth aspect, the linear traffic information includes a volume of each phase of linear traffic, a time point when each phase of linear traffic starts to be generated, and a duration of each phase of linear traffic.

With reference to the fourth aspect or the first possible implementation manner of the fourth aspect, in a second possible implementation manner, the linear traffic information includes a bit rate of each phase of linear traffic, a time point when each phase of linear traffic starts to be generated, and a duration of each phase of linear traffic.

With reference to the fourth aspect or the first and the second possible implementation manners of the fourth aspect, in a third possible implementation manner, the performing charging according to the linear traffic information includes re-rating traffic.

With reference to the fourth aspect or the first to the third possible implementation manners of the fourth aspect, in a fourth possible implementation manner, the charging request is a credit control request CCR, and the parameter indicating linear traffic information is carried in an extension field or a reserved field in the CCR message.

With reference to the fourth aspect or any one of the first to the fourth possible implementation manners of the fourth aspect, in a fifth possible implementation manner, the linear traffic volume includes an uplink traffic volume and a downlink traffic volume, and the linear traffic bit rate includes an uplink traffic bit rate and a downlink traffic bit rate.

According to a fifth aspect, a charging system is provided, including an access device and a charging device, where the access device is configured to send a traffic volume request to the charging device, receive information about a granted traffic volume that is returned by the charging device according to the traffic volume request, and send a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated in a process in which the end user uses the granted traffic volume; and the charging device is configured to receive the traffic volume request sent by the access device, return the information about the granted traffic volume to the access device according to the traffic volume request, receive the charging request sent by the access device, where the charging request carries the parameter indicating linear traffic information, and perform charging according to the linear traffic information.

According to a sixth aspect, a computing device is provided, including a processor, a memory, a bus, and a communications interface, where the memory is configured to store a computing device executable instruction, and the processor is connected to the memory by using the bus, and when the computing device is running, the processor executes the computer executable instruction stored in the memory, so that the computing device executes the method according to the first aspect or the second aspect or any possible implementation manner of the first aspect or the second aspect.

According to the technical solutions provided in the embodiments of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

### BRIEF DESCRIPTION OF DRAWINGS

FIG. 1 is an exemplary signaling diagram of a existing real-time charging method;
FIG. 2 is a schematic diagram of a network architecture applied to an embodiment of the present invention;
FIG. 3 is an exemplary flowchart of a charging method according to an embodiment of the present invention;
FIG. 4 is an exemplary flowchart of a charging method according to an embodiment of the present invention;
FIG. 5 is an exemplary signaling diagram of a charging method according to an embodiment of the present invention;
FIG. 6 is a schematic diagram of linear traffic information according to an embodiment of the present invention;
FIG. 7 is a schematic structural diagram of an access device according to an embodiment of the present invention;
FIG. 8 is a schematic structural diagram of a charging device according to an embodiment of the present invention;
FIG. 9 is a schematic structural diagram of a charging system according to an embodiment of the present invention; and
FIG. 10 is a schematic diagram of a hardware structure of a general-purpose computer structure according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

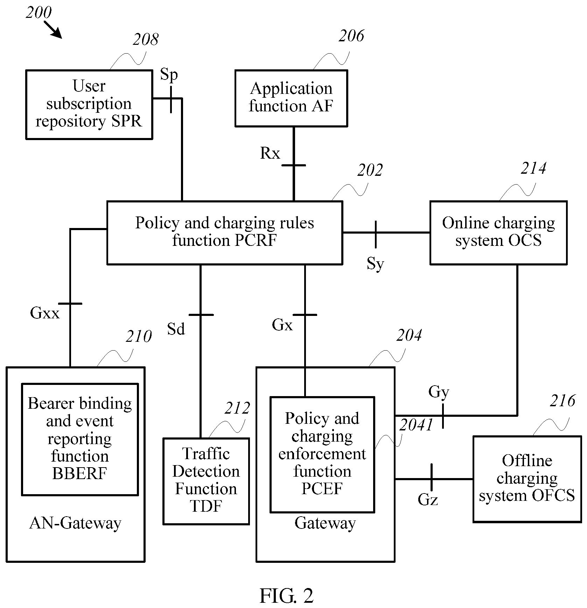

FIG. 2 is a schematic diagram of a network architecture applied to an embodiment of the present invention. The network architecture 200 includes a policy and charging rules function 202 (Policy and Charging Rule Function, PCRF), a policy and charging enforcement function 2041 (Policy and Charging Enforcement Function, PCEF), an application function 206 (Application Function, AF), a subscription profile repository 208 (Subscription Profile Respository, SPR), a bearer binding and event reporting function 210 (Bearing Binding and Event Report Function, BBERF), a Traffic Detection Function 212 (Traffic Detection Function, TDF), an OCS 214, and an offline charging system 216 (Offline Charging System, OFCS).

The PCRF 202 includes policy control decision and traffic-based charging control functions. The PCRF 202 receives input from the PCEF 2041 by using a Gx interface to provide the PCEF 2041 with network control functions regarding service data flow detection, gating control (Gating Control), quality of service (Quality of Service, QoS) control, and traffic-based charging. The PCRF 202 sends policy and charging rules formulated by the PCRF 202 to the PCEF 2041 for execution, and the PCRF 202 also needs to ensure that these rules are consistent with user subscription information. A basis for the PCRF 202 to formulate the policy and charging rules includes service related information acquired from the AF 206, user policy charging control subscription information acquired from the SPR 208, and bearer-related network information acquired from the PCEF 2041.

The PCEF 2041 mainly includes functions, including service data flow detection, policy enforcement, and traffic-based charging. The PCEF 2041 function is usually located in a gateway 204 (Gateway, GW), such as a GGSN gateway, a packet data network gateway (Packet Data Network Gateway, P-GW) in a 4G core network (Evolved Packet Core, EPC), or a packet data gateway (Packet Data Gateway, PDG) in a wireless local area network (Wireless Local Area Network, WLAN). The PCEF 2041 may also be deployed independently.

Functions of the BBERF 210 include bearer binding, uplink bear binding verification, and event reporting. This function is located in a gateway, such as a service gateway (Service Gateway, S-GW) that uses Proxy Mobile IP (Proxy Mobile IP, PMIP) based on an S5/S8 interface to implement 3GPP access, an HRPD service gateway in high rate packet data (High Rate Packet Data, HRPD), or an access gateway (Access Gateway, A-GW) in a non-3G access scenario.

The TDF 212 executes application program detection and report detection. For example, the TDF 212 can recognize deep packet inspection (deep packet inspection, DPI). If the TDF 212 does not detect the information, the TDF 212 executes gating control to redirect bandwidth restriction. If application program information can be detected, the information is submitted to the PCRF 202, and then the PCRF 202 generates a decision and submits the decision to the PCEF 2041 for control.

The OCS 214 provides user- and service data flow-based credit control functions. The OCS 214 mainly includes modules of online collection, charging control, rating, balance management, and the like, implementing an online charging function, and cooperates with another charging network element device (a session- or event-based online charging event requesting device, such as an SCP, a CCG, or an ISMP) to perform real-time traffic control. The OCS 214 is connected to the PCEF 2041 by using a Gy interface.

The OFCS 216 and the PCEF 2041 together complete a charging operation in an offline charging manner.

In the embodiments of the present invention, it is considered that the PCEF is located in the GGSN gateway.

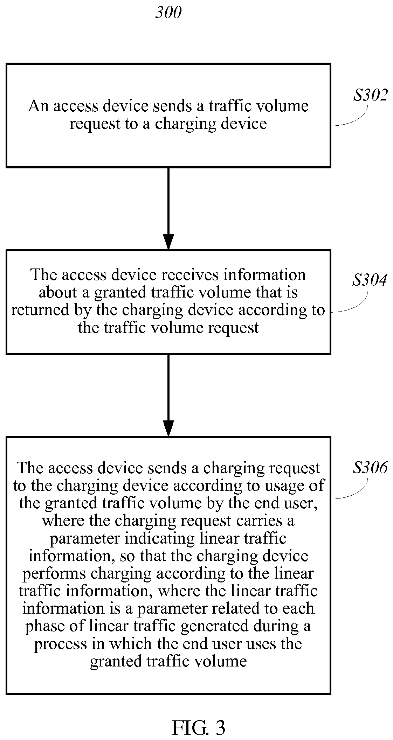

FIG. 3 is an exemplary flowchart of a charging method according to an embodiment of the present invention. In a specific implementation process, the charging method 300 may be executed by, for example, an access device, but is not limited thereto, where the access device may be, for example, a GGSN, but is not limited thereto. In this embodiment, a charging device communicates with the access device according to the Diameter (Diameter) protocol.

S302: An access device sends a traffic volume request to a charging device.

Optionally, the traffic volume request may be a CCR message.

S304: The access device receives information about a granted traffic volume that is returned by the charging device according to the traffic volume request, where "the information about the granted traffic volume that is returned by the charging device according to the traffic volume request" is specifically a message that carries a parameter indicating the information about the granted traffic volume and that is returned by the charging device according to the traffic volume request.

Optionally, the message that carries the information about the granted traffic volume may be a CCA message. Specifically, the message that carries the parameter indicating the information about the granted traffic volume may be a CCA message.

S306: The access device sends a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

Optionally, the linear traffic information includes a volume of each phase of linear traffic, a time point when each phase of linear traffic starts to be generated, and a duration of each phase of linear traffic, where the volume of each phase of linear traffic refers to a linear traffic volume of each phase of linear traffic.

Optionally, the linear traffic information includes a bit rate of each phase of linear traffic, a time point when each phase of linear traffic starts to be generated, and a duration of each phase of linear traffic, where the bit rate of each phase of linear traffic refers to a traffic bit rate of each phase of linear traffic.

Optionally, a manner for obtaining the linear traffic volume includes: setting a timer, configuring a timing duration, and when a traffic use duration reaches the timing duration, acquiring, by the access device, a used traffic volume.

Optionally, a manner for obtaining the linear traffic bit rate includes: setting a timer, configuring a timing duration, and when a traffic use duration reaches the timing duration, acquiring, by the access device, a used traffic volume and determining the linear traffic bit rate according to the used traffic volume and the timing duration, where the linear traffic bit rate refers to a traffic bit rate of the foregoing linear traffic.

Optionally, the charging request is a CCR message, and the parameter indicating linear traffic information is carried in an extension field or a reserved field in the CCR message, and specifically, the parameter indicating the linear traffic information is carried in an extension field in the CCR message or carried in a reserved field in the CCR message.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

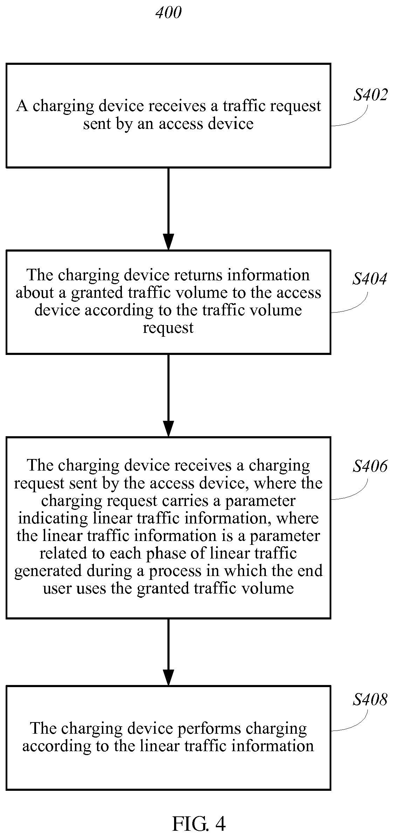

FIG. 4 is an exemplary flowchart of a charging method according to an embodiment of the present invention. In a specific implementation process, the charging method 400 may be executed by, for example, a charging device, but is not limited thereto. The charging device may be, for example, a pre-paid server (Pre-Paid Server, PPS), but is not limited thereto. Further, the pre-paid server may be specifically, for example, an OCS, but is not limited thereto.

S402: A charging device receives a traffic volume request sent by an access device.

S404: The charging device returns information about a granted traffic volume to the access device according to the traffic volume request. That the charging device returns information about a granted traffic volume to the access device according to the traffic volume request is specifically that the charging device returns, to the access device according to the traffic volume request, a message that carries a parameter indicating the information about the granted traffic volume.

S406: The charging device receives a charging request sent by the access device, where the charging request carries a parameter indicating linear traffic information, where the linear traffic information is a parameter related to each phase of linear traffic generated during a process in which the end user uses the granted traffic volume.

Optionally, the linear traffic information includes a volume of each phase of linear traffic, a time point when each phase of linear traffic starts to be generated, and a duration of each phase of linear traffic, where the volume of each phase of linear traffic refers to a linear traffic volume of each phase of linear traffic.

Optionally, the linear traffic information includes a bit rate of each phase of linear traffic, a time point when each phase of linear traffic starts to be generated, and a duration of each phase of linear traffic, where the bit rate of each phase of linear traffic refers to a traffic bit rate of each phase of linear traffic.

S408: The charging device performs charging according to the linear traffic information.

Optionally, the performing charging according to the linear traffic information includes re-rating traffic.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

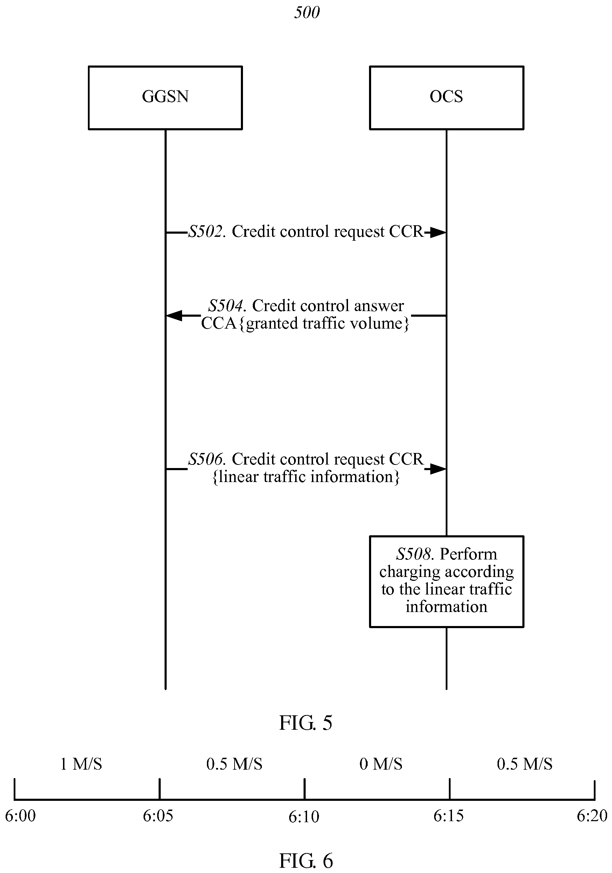

FIG. 5 is an exemplary signaling diagram of a charging method according to an embodiment of the present invention. In a specific implementation process, the charging method 500 may be executed by, for example, an access device and a charging device, but is not limited thereto. In this embodiment, the access device may be, for example, a GGSN, but is not limited thereto. The charging device may be, for example, a PPS, but is not limited thereto. Further, a pre-paid server may be specifically, for example, an OCS, but is not limited thereto. The access device communicates with the charging device according to the Diameter (Diameter) protocol. In FIG. 5, the GGSN sends a CCR message to request the OCS to grant a traffic volume; the OCS sends a granted traffic volume to the GGSN according to the CCR message by using the CCA message; and after receiving the traffic volume granted by the OCS, the GGSN provides a service for an end user, so that the end user uses the granted traffic volume. In a process in which the end user uses the granted traffic volume, linear traffic information is generated. The GGSN reports the linear traffic information to the OCS by using a CCR message, and the OCS performs charging according to the linear traffic information.

S502: A GGSN sends a CCR message to an OCS, where the CCR message is a traffic volume request used to request the OCS to grant a traffic volume.

S504: The OCS sends a CCA message to the GGSN, where information about a granted traffic volume is carried.

The OCS grants, according to an account balance status of the end user, the traffic volume requested by the GGSN. Specifically, when an account balance of the end user is sufficient to pay for the traffic volume requested by the GGSN, granting is performed in the following two manners:

In a first manner, the OCS grants the traffic volume requested by the GGSN.

In a second manner, the OCS determines a granted traffic volume according to an internal policy, and may usually dynamically adjust the granted traffic volume according to a network used by the user, a network speed, or a status of a service package purchased by the user. In this case, the granted traffic volume may not necessarily be the same as the traffic volume requested by the GGSN.

If the account balance of the end user is not sufficient to pay for the traffic volume requested by the GGSN, a traffic volume for which the account balance can be paid is granted.

S506: Generate linear traffic information during a process in which an end user uses the granted traffic volume, and the GGSN sends the linear traffic information to the OCS by using a CCR message.

S508: The OCS performs charging according to the linear traffic information.

Specifically, the OCS may accurately trace traffic usage according to the linear traffic information, to re-rate traffic.

In S506, specifically, because the traffic bit rate is not necessarily constant during a process of using a service, for example, surfing the Internet, by the end user, a situation in which traffic rates are different in different time periods may occur during the process of using the granted traffic volume. For example, in a case shown in FIG. 6, in FIG. 6, the OCS grants the GGSN 600 M of traffic, during a process in which the end user surfs the Internet by using the 600 M of traffic, in a time period from 6:00 to 6:05, a traffic bit rate is 1 M/S, in a time period from 6:05 to 6:10, a traffic bit rate is 0.5 M/S, in a time period from 6:10 to 6:15, a traffic bit rate is 0 M/S, and in a time period from 6:15 to 6:20, a traffic bit rate is 0.5 M/S.

A continuous time with a same traffic bit rate is a linear traffic phase. For example, in FIG. 6, the time period from 6:00 to 6:05 with the traffic bit rate 1 M/S is a linear traffic phase. A total volume of traffic in a linear traffic phase is referred to as a linear traffic volume. For example, in FIG. 6, a total volume of traffic in the time period from 6:00 to 6:05 is 1 M/S*60S*5=300 M, and 300 M is a linear traffic volume in this linear traffic phase. The continuous time is referred to as Phase-Duration, a duration of the phase of linear traffic. For example, for the linear traffic phase from 6:00 to 6:05 shown in FIG. 6, five minutes is a duration of the phase of linear traffic. A start time point of the duration is referred to as Start-Time, a time point when the phase of linear traffic starts to be generated. For example, for the linear traffic phase from 6:00 to 6:05 in FIG. 6, 6:00 is a time point when the phase of linear traffic starts to be generated.

The GGSN sends linear traffic information of each linear traffic phase to the OCS, where the linear traffic information of each linear traffic phase includes but is not limited to either of the following two cases:

In a first case, a linear traffic volume, a Start-Time that is a time point when the phase of linear traffic starts to be generated, and a Phase-Duration that is a duration of the phase of linear traffic are included, where the linear traffic volume includes an uplink traffic volume Output-Quota and a downlink traffic volume Input-Quota. The GGSN may upload a sum of the uplink traffic volume Output-Quota and the downlink traffic volume Input-Quota, or may upload the uplink traffic volume Output-Quota and the downlink traffic volume Input-Quota as two pieces of data. That "the GGSN may upload a sum of the uplink traffic volume Output-Quota and the downlink traffic volume Input-Quota, or may upload the uplink traffic volume Output-Quota and the downlink traffic volume Input-Quota as two pieces of data" may be specifically that the GGSN may upload a sum of traffic volumes of the uplink traffic volume and the downlink traffic volume, or may upload the uplink traffic volume and the downlink traffic volume as two pieces of data.

In a second case, a linear traffic bit rate, a Start-Time that is a time point when the phase of linear traffic starts to be generated, and a Phase-Duration that is a duration of the phase of linear traffic are included, where the linear traffic bit rate includes an uplink traffic bit rate Output-Quota-Ratio and a downlink traffic bit rate Input-Quota-Ratio. The GGSN may upload a sum of rates of the uplink traffic bit rate Output-Quota-Ratio and the downlink traffic bit rate Input-Quota-Ratio, or may upload the uplink traffic bit rate Output-Quota-Ratio and the downlink traffic bit rate Input-Quota-Ratio as two pieces of data, where the linear traffic bit rate refers to a traffic bit rate of the linear traffic phase.

In a specific implementation process, the linear traffic volume or the linear traffic bit rate may be determined by setting a timer, configuring a timing duration, and acquiring a used traffic volume when a traffic use duration reaches the timing duration.

Specifically, when the GGSN sends the linear traffic information in the foregoing first case, that is, sends a volume of each phase of linear traffic, a Start-Time that is a time point when each phase of linear traffic starts to be generated, and a Phase-Duration that is a duration of each phase of linear traffic to the OCS, the timing duration may be set to one second, and when a traffic use duration reaches one second, the GGSN acquires a used traffic volume. In this way, the Phase-Duration that is the duration of each phase of linear traffic is the same, and the Phase-Duration is equal to one second. In the process in which the user uses the OCS-granted traffic volume, the GGSN acquires, at each one second, a volume of traffic used within the one second, and sends the used traffic volume, a time point when the used traffic starts to be generated, and the duration one second to the OCS. As described above, the used traffic volume includes an uplink traffic volume and a downlink traffic volume. The GGSN may upload a sum of the uplink traffic volume and the downlink traffic volume, that is, the used traffic volume within the one second, or may upload the uplink traffic volume and the downlink traffic volume as two pieces of data. In specific implementation, the timing duration may be determined by an operator. For different timing durations, an error may exist between the traffic volume acquired by the GGSN and a traffic volume actually used by the user within the timing duration, and the operator may set a length of a timing duration according to an error range that is acceptable by the operator. Setting the timing duration to one second in the present invention is merely to provide a feasible manner, and is not intended to limit the protection scope of the present invention. The foregoing "for different timing durations, an error may exist between the traffic volume acquired by the GGSN and a traffic volume actually used by the user within the timing duration" may be specifically: because the Phase-Duration is different when the timing duration is different, when the timing duration is long, for example, five minutes, a traffic bit rate within a Phase-Duration may not be constant, and therefore, an error may exist between the timing duration used as a duration of a linear traffic phase and an actual duration of the linear traffic phase.

Optionally, if traffic volumes used within multiple continuous timing durations are the same, the multiple continuous timing durations may be combined as one Phase-Duration, a duration of one linear traffic phase, and the duration Phase-Duration after combination, a total traffic volume generated within the Phase-Duration after combination, and a Start-Time that is a time point when a first timing duration of the multiple timing durations starts are reported to the OCS. For example, the timing duration is one second, and the GGSN acquires a used traffic volume once a second. If in a time of 10 continuous one seconds, a used traffic volume in each one second is 1 M, and a used traffic volume in the 11^{th} one second is not 1 M, the 10 one seconds may be combined as 10 seconds. In this case, the 10 seconds is a duration Phase-Duration of one linear traffic phase, and a total volume of linear traffic within the linear traffic phase is 10 M. If a time point when the first one second of the 10 one seconds starts is 6:00, a Start-Time of the linear traffic phase is 6:00. The GGSN sends information indicating 10 seconds, 10 M, and 6:00 to the OCS by using a CCR message. Because the Start-Time of the first timing duration is the same as the Start-Time of the linear traffic phase obtained by combining multiple timing durations, reporting the Start-Time of the first timing duration is equal to reporting the Start-Time of the linear traffic phase after combination.

When the GGSN sends the linear traffic information of the second case, that is, sends a linear traffic bit rate, a Start-Time that is a time point when each phase of linear traffic starts to be generated, and a Phase-Duration that is a duration of each phase of linear traffic, to the OCS, the timing duration is set to one second and the GGSN acquires used traffic each one second. The used traffic acquired by the GGSN is the linear traffic bit rate. If rates in several continuous seconds are the same, for example, rates in several continuous seconds are all 1 M/S, the several seconds may be combined as a Phase-Duration that is a duration of one linear traffic phase, and the duration Phase-Duration after combination, the traffic bit rate in the duration, and a Start-Time that is a time point when the duration starts are reported to the OCS. For example, the timing duration is set to one second, and the GGSN acquires used traffic each one second to obtain a traffic bit rate. If a traffic bit rate in a time of 10 continuous seconds is always 1 M/S, and a traffic bit rate in the 11^{th} second is not 1 M/S, the first 10 seconds may be combined. In this case, the 10 seconds are a Phase-Duration that is a duration of one linear traffic phase and a linear traffic bit rate in the linear traffic phase is 1 M/S. If a time point when the 10 seconds starts is 6:00, a Start-Time of the linear traffic phase is 6:00. The GGSN sends information indicating 10 seconds, 1 M/S, and 6:00 to the OCS by using a CCR message.

Optionally, a traffic bit rate in each second may also be reported to the GGSN. In this case, the Phase-Duration may not be reported, and the reported linear traffic information is the linear traffic bit rate and the Start-Time that the time point when each phase of linear traffic starts to be generated.

When the foregoing linear traffic information is reported, a linear traffic phase without traffic generated may not be reported, for example, the time period from 6:10 to 6:15 in FIG. 6, and only a linear traffic phase with traffic generated is reported, for example, the time periods from 6:00 to 6:05, from 6:05 to 6:10, and from 6:15 to 6:20. "Without traffic generated" means that no traffic is consumed, and "with traffic generated" means that traffic is consumed.

When the linear traffic information is reported to the OCS, parameters indicating the linear traffic volume, the linear traffic bit rate, the time point when each phase of linear traffic starts to be generated, and the duration of each phase of linear traffic may be carried in extension fields in the CCR message or may be carried in reserved fields in the CCR message. For example, the following fields are extended in the CCR to report the linear traffic volume, the time point when each phase of linear traffic starts to be generated, and the duration of each phase of linear traffic:

```
           USU-Quota-Information:: = <AVP Header:**>
                                      [Start-Time]
                                      [Phase-Duration]
                                      [Output-Quota]
                                      [Input-Quota]
                                      *[AVP]
```

Optionally, the GGSN sends information about each phase of linear traffic to the OCS by using a CCR message requesting a next granted traffic volume.

The foregoing steps enable the OCS to obtain detailed traffic usage, and re-rating can be implemented. For example, during normal charging, a tariff time change takes place at 5:00. However, because of an incorrect package configuration, a tariff time change point of a newly configured package is 6:08. Because the GGSN reports linear traffic information with a Start-Time being 6:05, a Phase-Duration being five minutes, and a traffic bit rate being 0.5 M/S, it may be obtained by calculation that a traffic volume before the tariff time change point 6:08, that is, in a time period from 6:05 to 6:08, is 0.5 M/S*60S*3=90 M, and a traffic volume after the tariff time change point 6:08, that is, in a time period from 6:08 to 6:10, is 0.5 M/S*60S*2=60 M. Because the GGSN reports the bit rate of each phase of linear traffic, the time point when each phase of linear traffic starts to be generated, and the duration of each phase of linear traffic, traffic volumes before 6:05 and after 6:10 may be calculated by using the same method. A traffic volume before the tariff time change point 6:08 is obtained by adding the traffic volume before 6:05 and the traffic volume in the time period from 6:05 to 6:08, and a traffic volume after the tariff time change point 6:08 is obtained by adding the traffic volume after 6:10 and the traffic volume in the time period from 6:08 to 6:10. In this way, traffic usage is traced. Then, based on tariffs before and after 6:08, fees incurred according to the traffic volumes used before and after 6:08 may be obtained, and then the traffic may be re-rated.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging. Continuous time periods with a same used traffic volume or a same bit rate are combined, which can decrease an amount of reported data, and reduce network load.

FIG. 7 is a schematic structural diagram of an access device according to an embodiment of the present invention. The access device is configured to perform the charging method in the foregoing embodiment in FIG. 3. The access device 700 includes a sending module 702 and a receiving module 704.

The sending module 702 is configured to send a traffic volume request to a charging device.

The receiving module 704 is configured to receive information about a granted traffic volume that is returned by the charging device according to the traffic volume request.

The sending module 702 is further configured to send a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

Optionally, the linear traffic information includes a volume of each phase of linear traffic, a time point when each phase of linear traffic starts to be generated, and a duration of each phase of linear traffic.

Optionally, a manner for obtaining the linear traffic volume may be: setting a timer, configuring a timing duration, and when a traffic use duration reaches the timing duration, acquiring, by the access device, a used traffic volume.

Optionally, the linear traffic information includes a bit rate of each phase of linear traffic, a time point when each phase of linear traffic starts to be generated, and a duration of each phase of linear traffic.

Optionally, a manner for obtaining the linear traffic bit rate may be: setting a timer, configuring a timing duration, when a traffic use duration reaches the timing duration, acquiring, by the access device, a used traffic volume and determining the linear traffic bit rate according to the used traffic volume and the timing duration.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

FIG. 8 is a schematic structural diagram of a charging device according to an embodiment of the present invention. The charging device is configured to perform the charging method in the foregoing embodiment in FIG. 4. The charging device 800 includes a receiving module 802, a sending module 804, and a charging module 806.

The receiving module 802 is configured to receive a traffic volume request sent by an access device.

The sending module 804 is configured to return information about a granted traffic volume to the access device according to the traffic volume request.

The receiving module 802 is further configured to receive a charging request sent by the access device, where the charging request carries a parameter indicating linear traffic information, where the linear traffic information is a parameter related to each phase of linear traffic generated during a process in which the end user uses the granted traffic volume.

The charging module 806 is configured to perform charging according to the linear traffic information.

Optionally, the linear traffic information includes a volume of each phase of linear traffic, a time point when each phase of linear traffic starts to be generated, and a duration of each phase of linear traffic.

Optionally, the linear traffic information includes a bit rate of each phase of linear traffic, a time point when each phase of linear traffic starts to be generated, and a duration of each phase of linear traffic.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

FIG. 9 is a schematic structural diagram of a charging system according to an embodiment of the present invention. The charging system 900 includes an access device 902 and a charging device 904.

The access device 902 is configured to send a traffic volume request to the charging device, receive information about a granted traffic volume that is returned by the charging device according to the traffic volume request, and send a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

The charging device 904 is configured to receive the traffic volume request sent by the access device; return the information about the granted traffic volume to the access device according to the traffic volume request; receive the charging request sent by the access device, where the charging request carries the parameter indicating linear traffic information; and perform charging according to the linear traffic information.

The "information about the granted traffic volume that is returned by the charging device according to the traffic volume request" is specifically a message that carries the parameter indicating the information about the granted traffic volume and that is returned by the charging device according to the traffic volume request.

According to the technical solution provided in this embodiment of the present invention, information about each phase of linear traffic generated within a time in which a granted traffic volume is used is reported, so that a charging device obtains detailed traffic usage, and can accurately trace traffic usage at a specific time point by a user according to the linear traffic information, thereby enabling accurate charging.

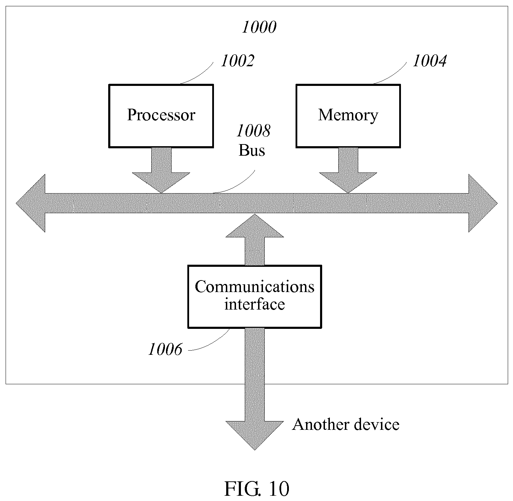

FIG. 10 is a schematic diagram of a hardware structure of a general-purpose computer structure 1000 according to an embodiment of the present invention. As shown in FIG. 10, the general-purpose computer structure 1000 includes a processor 1002, a memory 1004, a communications interface 1006, and a bus 1008. The processor 1002, the memory 1004, and the communications interface 1006 implement mutual communication connections by using the bus 1008.

The processor 1002 may be a general-purpose central processing unit (Central Processing Unit, CPU), a microprocessor, an application-specific integrated circuit (Application Specific Integrated Circuit, ASIC), or one or more integrated circuits, and is configured to execute a related program, so as to implement the technical solutions provided in the embodiments of the present invention.

The memory 1004 may be a read-only memory (Read Only Memory, ROM), a static storage device, a dynamic storage device, or a random access memory (Random Access Memory, RAM). The memory 1004 may store an operating system and another application program. When the technical solutions provided in the embodiments of the present invention are implemented by using software or firmware, program code used to implement the technical solutions provided in the embodiments of the present invention is saved in the memory 1004, and is executed by the processor 1002.

The communications interface 1006 uses, for example, but is not limited to a transceiver apparatus such as a transceiver, to implement communication with another device or a communications network.

The bus 1008 may include a path that transmits information between the components (such as the processor 1002, the memory 1004, and the communications interface 1006).

When an access device includes the general-purpose computer structure 1000, when the processor 1002 invokes an instruction in the memory 1004, the following is included:
controlling, by the processor 1002, the communications interface 1006 to send a traffic volume request to a charging device;
controlling, by the processor 1002, the communications interface 1006 to receive information about a granted traffic volume that is returned by the charging device according to the traffic volume request; and controlling, by the processor 1002, the communications interface 1006 to send a charging request to the charging device according to usage of the granted traffic volume by the end user, where the charging request carries a parameter indicating linear traffic information, so that the charging device performs charging according to the linear traffic information, where the linear traffic information is a parameter related to each phase of linear traffic generated during a process in which the end user uses the granted traffic volume.

When a charging device includes the general-purpose computer structure 1000, when the processor 1002 invokes an instruction in the memory 1004, the following is included:
controlling, by the processor 1002, the communications interface 1006 to receive a traffic volume request sent by an access device;
controlling, by the processor 1002, the communications interface 1006 to return information about a granted traffic volume to the access device according to the traffic volume request;
controlling, by the processor 1002, the communications interface 1006 to receive a charging request sent by the access device, where the charging request carries a parameter indicating linear traffic information, where the linear traffic information is a parameter related to each phase of linear traffic generated during a process in which the end user uses the granted traffic volume; and performing, by the processor 1002, charging according to the linear traffic information.

It should be noted that, although the general-purpose computer structure 1000 shown in FIG. 10 shows only the processor 1002, the memory 1004, the communications interface 1006, and the bus 1008, in a specific implementation process, persons skilled in the art should understand that the foregoing access device and charging device further include another component required in normal running. In addition, according to a specific need, persons skilled in the art should understand that the foregoing access device and charging device may further include a hardware component implementing another additional function. In addition, persons skilled in the art should understand that the foregoing access device and charging device may alternatively include only a component required for implementing this embodiment of the present invention, and do not need to include all components shown in FIG. 10.

Persons of ordinary skill in the art may understand that all or some of the steps of the foregoing methods may be implemented by a program instructing relevant hardware. The program may be stored in a computer readable storage medium. The storage medium includes a ROM, a RAM, an optical disc, and the like.

To sum up, the foregoing descriptions are merely exemplary embodiments of the present invention, and are not intended to limit the protection scope of the present invention. Any modification, equivalent replacement, or improvement made without departing from the spirit and principle of the present invention shall fall within the protection scope of the present invention.

## Claims

1. A charging method, comprising the following steps:
sending, by an access device, a traffic volume request to a charging device;
receiving, by the access device, information about a granted traffic volume that is returned by the charging device according to the traffic volume request; and
sending, by the access device, a charging request to the charging device according to usage of the granted traffic volume by an end user, wherein the charging request carries a parameter indicating linear traffic information, so that the charging device performs charging according to the linear traffic information, wherein the linear traffic information is a parameter related to each phase of linear traffic generated during a process in which the end user uses the granted traffic volume.

2. The charging method according to claim 1, wherein the linear traffic information comprises a volume of each phase of linear traffic , a time point when each phase of linear traffic starts to be generated, and a duration of each phase of linear traffic.

3. The charging method according to claim 1, wherein the linear traffic information comprises a bit rate of each phase of linear traffic, a time point when each phase of linear traffic starts to be generated, and a duration of each phase of linear traffic.

4. The charging method according to claim 2, wherein a manner for obtaining the linear traffic volume comprises:
setting a timer, configuring a timing duration, and when a traffic use duration reaches the timing duration, acquiring, by the access device, a used traffic volume.

5. The charging method according to claim 3, wherein a manner for obtaining the linear traffic bit rate comprises:
setting a timer, configuring a timing duration, and when a traffic use duration reaches the timing duration, acquiring, by the access device, a used traffic volume and determining the linear traffic bit rate according to the used traffic volume and the timing duration.

6. The charging method according to any one of claims 1 to 5, wherein the traffic volume request and the charging request are credit control request CCR messages, the information about the granted traffic volume is carried in a credit control answer CCA message, and the parameter indicating linear traffic information is carried in an extension field or a reserved field in a CCR message.

7. A charging method, comprising the following steps:
receiving, by a charging device, a traffic volume request sent by an access device;
returning, by the charging device, information about a granted traffic volume to the access device according to the traffic volume request;
receiving, by the charging device, a charging request sent by the access device, wherein the charging request carries a parameter indicating linear traffic information, wherein the linear traffic information is a parameter related to each phase of linear traffic generated during a process in which an end user uses the granted traffic volume; and
performing, by the charging device, charging according to the linear traffic information.

8. The charging method according to claim 7, wherein the linear traffic information comprises a volume of each phase of linear traffic, a time point when each phase of linear traffic starts to be generated, and a duration of each phase of linear traffic.

9. The charging method according to claim 7, wherein the linear traffic information comprises a bit rate of each phase of linear traffic, a time point when each phase of linear traffic starts to be generated, and a duration of each phase of linear traffic.

10. The charging method according to claim 7, wherein the performing charging according to the linear traffic information comprises re-rating traffic.

11. The charging method according to claim 7, wherein the charging request is a credit control request CCR, and the parameter indicating linear traffic information is carried in an extension field or a reserved field in the credit control request.

12. An access device, comprising a sending module and a receiving module, wherein
the sending module is configured to send a traffic volume request to a charging device;
the receiving module is configured to receive information about a granted traffic volume that is returned by the charging device according to the traffic volume request; and
the sending module is further configured to send a charging request to the charging device according to usage of the granted traffic volume by an end user, wherein the charging request carries a parameter indicating linear traffic information, so that the charging device performs charging according to the linear traffic information, wherein the linear traffic information is a parameter related to each phase of linear traffic generated during a process in which the end user uses the granted traffic volume.

13. The access device according to claim 12, wherein the linear traffic information comprises a volume of each phase of linear traffic, a time point when each phase of linear traffic starts to be generated, and a duration of each phase of linear traffic.

14. The access device according to claim 12, wherein the linear traffic information comprises a bit rate of each phase of linear traffic, a time point when each phase of linear traffic starts to be generated, and a duration of each phase of linear traffic.

15. The access device according to claim 13, wherein a manner for obtaining the linear traffic volume comprises:
setting a timer, configuring a timing duration, and when a traffic use duration reaches the timing duration, acquiring, by the access device, a used traffic volume.

16. The charging method according to claim 14, wherein a manner for obtaining the linear traffic bit rate comprises:
setting a timer, configuring a timing duration, and when a traffic use duration reaches the timing duration, acquiring, by the access device, a used traffic volume and determining the linear traffic bit rate according to the used traffic volume and the timing duration.

17. The access device according to any one of claims 12 to 16, wherein the traffic volume request and the charging request are credit control request CCR messages, the information about the granted traffic volume is carried in a credit control answer CCA message, and the parameter indicating linear traffic information is carried in an extension field or a reserved field in a CCR message.

18. A charging device, comprising a receiving module, a sending module, and a charging module, wherein
the receiving module is configured to receive a traffic volume request sent by an access device;
the sending module is configured to return information about a granted traffic volume to the access device according to the traffic volume request;
the receiving module is further configured to receive a charging request sent by the access device, wherein the charging request carries a parameter indicating linear traffic information, wherein the linear traffic information is a parameter related to each phase of linear traffic generated during a process in which an end user uses the granted traffic volume; and
the charging module is configured to perform charging according to the linear traffic information.

19. The charging device according to claim 18, wherein the linear traffic information comprises a volume of each phase of linear traffic, a time point when each phase of linear traffic starts to be generated, and a duration of each phase of linear traffic.

20. The charging device according to claim 18, wherein the linear traffic information comprises a bit rate of each phase of linear traffic, a time point when each phase of linear traffic starts to be generated, and a duration of each phase of linear traffic.

21. The charging device according to claim 18, wherein the performing charging according to the linear traffic information comprises re-rating traffic.

22. The charging device according to claim 18, wherein the charging request is a credit control request CCR, and the parameter indicating linear traffic information is carried in an extension field or a reserved field in the CCR message.

23. A charging system, comprising an access device and a charging device, wherein
the access device is configured to send a traffic volume request to the charging device, receive information about a granted traffic volume that is returned by the charging device according to the traffic volume request, and send a charging request to the charging device according to usage of the granted traffic volume by the end user, wherein the charging request carries a parameter indicating linear traffic information, so that the charging device performs charging according to the linear traffic information, wherein the linear traffic information is a parameter related to each phase of linear traffic generated in a process in which the end user uses the granted traffic volume; and
the charging device is configured to receive the traffic volume request sent by the access device, return the information about the granted traffic volume to the access device according to the traffic volume request, receive the charging request sent by the access device, wherein the charging request carries the parameter indicating linear traffic information, and perform charging according to the linear traffic information.
